# EUROPÄISCHE PATENTSCHRIFT

(11) **EP 3 394 138 B1**
(45) Veröffentlichungstag und Bekanntmachung des Hinweises auf die Patenterteilung: **11.03.2020**
(21) Anmeldenummer: 16822993.8
(22) Anmeldetag: 21.12.2016
(51) Int. Cl.: C08G 18/48, C08G 18/66, C08G 18/76, C08G 18/24, C08G 18/32, C08G 18/40, C08G 18/42

(54) **TPU SCHRUMPFMATERIAL**
TPU SHRINKAGE MATERIAL
MATERIAU RETRACTABLE EN TPU

(30) Priorität: 22.12.2015 EP 15201997
(43) Veröffentlichungstag der Anmeldung: 31.10.2018
(73) Patentinhaber: BASF SE, 67056 Ludwigshafen am Rhein (DE)
(72) Erfinder: TOMOVIC, Zeljko, 49448 Lemförde (DE); PRISSOK, Frank, 49448 Lemförde (DE); COHEN, Kathrin, 67056 Ludwigshafen am Rhein (DE)
(74) Vertreter: BASF IP Association
(86) Internationale Anmeldenummer: PCT/EP2016/082130
(87) Internationale Veröffentlichungsnummer: WO 2017/108920

(56) Entgegenhaltungen:
- WO-A1-2015/144435
- US-A- 5 821 180
- US-A1- 2008 258 352
- US-A1- 2011 193 256

## Beschreibung

Die vorliegende Erfindung betrifft ein Verfahren zur Herstellung eines Formkörpers (FK) umfassend die Herstellung eines thermoplastischen Polyurethans, die Herstellung eines Formkörpers (FK*) aus dem thermoplastischen Polyurethan, das Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans, das Dehnen des erwärmten Formkörpers (FK*) unter Erhalt eines Formkörpers (FK), und das Abkühlen des Formkörpers (FK) auf eine Temperatur unterhalb der Schalttemperatur des thermoplastischen Polyurethans, sowie die nach einem derartigen Verfahren erhaltenen oder erhältlichen Formkörper. Weiter betrifft die vorliegende Erfindung ein thermoplastisches Polyurethan mit Formgedächtnis-Effekt sowie die Verwendung eines thermoplastischen Polyurethans zur Herstellung eines Formkörpers mit Formgedächtnis-Effekt in einem Temperaturbereich von 0 °C bis 130 °C. Unter Schalttemperatur wird die Temperatur verstanden, bei der ein Phasenübergang unterhalb der Schmelztemperatur der Hartphase erfolgt. Dabei kann es sich um einen Glasübergang oder einen Schmelzübergang von teilkristallinen oder vollkristallinen Strukturen handeln.

JP 2005102953 beschreibt ein nicht thermoplastisches Formgedächtnis- Harz zur Anpassung von Zähnen, das spätere Korrekturen gestattet. Das Harz ist entweder Polyurethan-, Polyurethane-Harnstoff-, Polynorbornen-, *t*-Polyisopren- oder Styren-Butadien-basiert und weist eine Glasübergangstemperatur zwischen 40 und 100 °C (bevorzugt 60 bis 80 °C) auf.

Thermoplastische Polyurethane für verschiedene Anwendungen sind aus dem Stand der Technik grundsätzlich bekannt. Durch die Variation der Einsatzstoffe können unterschiedliche Eigenschaftsprofile erhalten werden. Auch thermoplastische Polyurethane, die einen Formgedächtnis-Effekt zeigen, sind an sich bekannt.

WO 2011/060970 A1 bzw. die parallele US 2012/0279101 A1 offenbaren Sicherheitsetiketten zur Kennzeichnung von Waren, bei denen ein Formgedächtnismaterial auf der Basis von thermoplastischen Polymeren u.a. auch-TPU in einer mehrschichtigen, sehr dünnen Folie verwendet werden. Die Formgedächtnismaterialien stellen hierbei nur einen Teil der beschriebenen Etiketten dar und werden in Verbindung mit Haftvermittlern und weiteren Bestandteilen verwendet.

Bisphenol-A basierte Verbindungen werden als Kettenverlängerer für die Hartphase verwendet. Diese zeigen als Kettenverlängerer in der Hartphase Nachteile in den mechanischen Eigenschaften.

In WO 2015/144435 A1 werden Formkörper mit Formgedächtnis-Effekt offenbart, die ein thermoplastisches Polyurethan enthalten, das durch Umsetzung einer Polyisocyanatzusammensetzung, eines Kettenverlängerers und einer Polyolzusammensetzung erhalten wird, die mindestens ein Bisphenol-Derivat umfasst, ausgewählt aus der Gruppe bestehend aus Bisphenol-A-Derivaten mit einem Molekulargewicht Mw > 315 g/mol und Bisphenol-S-Derivaten mit einem Molekulargewicht Mw > 315 g/mol, wobei mindestens eine der OH-Gruppen des Bisphenol-Derivats alkoxyliert ist. Nachteilig ist der Gehalt an gesundheitlich bedenklichem Bisphenol.

US 7524914 B2 beschreibt die Herstellung eines Formgedächtnis-TPU durch die Verwendung eines Dihydroxyl-terminierten Polyhedral Oligosilsesquioxans. Dieses ist sehr aufwendig herzustellen.

Ausgehend vom Stand der Technik lag eine der vorliegenden Erfindung zugrunde liegende Aufgabe darin, ein thermoplastisches Polyurethan mit einem Formgedächtnis-Effekt zur Verfügung zu stellen, das insbesondere für Anwendungen geeignet ist, die mit Lebensmitteln in Kontakt kommen. Eine weitere Aufgabe der vorliegenden Erfindung lag darin, ein thermoplastisches Polyurethan mit einem Formgedächtnis-Effekt zur Verfügung zu stellen, das insbesondere für Anwendungen geeignet ist, die mit Lebensmitteln in Kontakt kommen, und das einfach und kostengünstig in einem one-shot Verfahren herzustellen ist.

Erfindungsgemäß wird diese Aufgabe gelöst durch ein Verfahren zur Herstellung eines Formkörpers (FK) umfassend die folgenden Schritte:
(a) Herstellung eines thermoplastischen Polyurethans umfassend die Umsetzung
   (i) mindestens einer Polyisocyanatzusammensetzung;
   (ii) mindestens eines Kettenverlängerers; und
   (iii) mindestens einer Polyolzusammensetzung,
      wobei die Polyolzusammensetzung mindestens ein Polyol (P1) umfasst, das mindestens einen aromatischen Polyester-Block (B1) aufweist;
(b) Herstellung eines Formkörpers (FK*) aus dem thermoplastischen Polyurethan,
(c) Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans,
(d) Dehnen des erwärmten Formkörpers (FK*) unter Erhalt eines Formkörpers (FK),
(e) Abkühlen des Formkörpers (FK) auf eine Temperatur unterhalb der Schalttemperatur des thermoplastischen Polyurethans,
   wobei der Beginn der permanenten Verformbarkeit dem Beginn des Schmelzens der Hartphase des thermoplastischen Polyurethans entspricht, und die Schalttemperatur dem Beginn des in der Temperatur am höchsten liegenden Phasenüberganges vor dem Schmelzbereich entspricht.

Erfindungsgemäß weist das Polyol (P1) einen aromatischen Polyester-Block (B1) auf. Darunter wird im Rahmen der vorliegenden Erfindung verstanden, dass der aromatischen Polyester-Block (B1) ein Polyester aus einer aromatischen Dicarbonsäure und einem aliphatischen Diol sein kann oder ein Polyester aus einer aliphatischen Dicarbonsäure und einem aromatischen Diol. Vorzugsweise ist der aromatischen Polyester-Block (B1) im Rahmen der vorliegenden Erfindung ein Polyester aus einer aromatischen Dicarbonsäure und einem aliphatischen Diol. Geeignete aromatische Dicarbonsäuren sind dabei beispielsweises Terephthalsäure, Isophthalsäure oder Phthalsäure, bevorzugt Terephthalsäure. Demgemäß sind geeignete Polyole (P1) im Rahmen der vorliegenden Erfindung solche, die beispielsweise mindestens einen Polyethylenterephthalat-Block oder mindestens einen Polybutylenterephthalat-Block aufweisen, wobei die Anzahl der Wiederholungseinheiten der Aromaten mindestens 2 in Reihe ist. Vorzugsweise wird der aromatischen Polyester-Block (B1) in einem gesonderten Schritt vor der weiteren Umsetzung zu Polyol (P1) hergestellt, um eine ausreichende Blocklänge der Wiederholungseinheiten der Aromaten zu gewährleisten.

Gemäß einer weiteren Ausführungsform betrifft die vorliegende Erfindung demgemäß ein Verfahren wie zuvor beschrieben, wobei der aromatischen Polyester-Block (B1) ein Polyester aus einer aromatischen Dicarbonsäure und einem aliphatischen Diol ist. Gemäß einer weiteren Ausführungsform betrifft die vorliegende Erfindung auch ein Verfahren wie zuvor beschrieben, wobei der aromatischen Polyester-Block (B1) ein Polyethylenterephthalat-Block ist.

Offenbart ist auch ein Verfahren zur Herstellung eines Formkörpers (FK) umfassend die folgenden Schritte:
(a) Herstellung eines thermoplastischen Polyurethans umfassend die Umsetzung
   (i) mindestens einer Polyisocyanatzusammensetzung;
   (ii) mindestens eines Kettenverlängerers; und
   (iii) mindestens einer Polyolzusammensetzung,
      wobei die Polyolzusammensetzung mindestens ein Polyol (P1) umfasst, das mindestens einen Polyethylenterephthalat-Block aufweist;
(b) Herstellung eines Formkörpers (FK*) aus dem thermoplastischen Polyurethan,
(c) Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans,
(d) Dehnen des erwärmten Formkörpers (FK*) unter Erhalt eines Formkörpers (FK),
(e) Abkühlen des Formkörpers (FK) auf eine Temperatur unterhalb der Schalttemperatur des thermoplastischen Polyurethans.

Weiterhin offenbart ist ein thermoplastisches Polyurethan, erhältlich oder erhalten durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Polyol (P1) umfasst, das mindestens einen aromatischen Polyester-Block (B1) aufweist.

Überraschenderweise wurde gefunden, dass durch das erfindungsgemäße Verfahren und die Verwendung eines thermoplastischen Polyurethan basierend auf Polyolen mit mindestens einem aromatischen Polyester-Block (B1) wie zuvor definiert, insbesondere mit einem Polyethylenterephthalat-Block, Kettenverlängerer und Diisocyanat Formkörper bzw. thermoplastische Polyurethane erhalten werden, die einen Formgedächtnis-Effekt aufweisen.

Erfindungsgemäß kann das thermoplastische Polyurethan insbesondere ein kompaktes thermoplastisches Polyurethan sein. Demgemäß betrifft die vorliegende Erfindung gemäß einer weiteren Ausführungsform ein Verfahren wie zuvor beschrieben, wobei das thermoplastische Polyurethan ein kompaktes thermoplastisches Polyurethan ist.

Gemäß dem erfindungsgemäßen Verfahren wird zunächst der aus dem thermoplastischen Polyurethan hergestellte Formkörper (FK*) bei einer Temperatur oberhalb der Schalttemperatur gedehnt (beispielsweise aufgeblasen) und im ausgedehnten Zustand auf eine Temperatur unterhalb der Schalttemperatur abgekühlt. Dabei wird ein Formkörper (FK) erhalten, der gegenüber dem Formkörper (FK*) gedehnt ist und in diesem ausgedehnten Zustand stabil ist. Die Ausdehnung des Materials ist somit "eingefroren". Durch erneutes Erwärmen des Formkörpers (FK) auf eine Temperatur oberhalb der Schalttemperatur verformt sich das TPU bzw. der Formkörper sehr schnell auf seine ursprüngliche Größe, d.h. auf die Größe des nicht gedehnten Formkörpers (FK*) zurück. Hierbei kann prozessbedingt eine Restdehnung von bis zu 20 % zurückbleiben.

Das erfindungsgemäße Verfahren umfasst die Schritte (a) bis (e). Dabei wird zunächst gemäß Schritt (a) ein thermoplastisches Polyurethan durch Umsetzung mindestens einer Polyisocyanatzusammensetzung, mindestens eines Kettenverlängerers und mindestens einer Polyolzusammensetzung hergestellt. Dabei umfasst die Polyolzusammensetzung erfindungsgemäß mindestens ein Polyol (P1), das mindestens einen Block (B1) wie zuvor definiert aufweist, insbesondere einen Polyethylenterephthalat-Block aufweist.

Gemäß Schritt (b) wird aus dem gemäß Schritt (a) erhaltenen thermoplastischen Polyurethan ein Formkörper (FK*) hergestellt. Der Formkörper (FK*) kann dabei im Rahmen der vorliegenden Erfindung beispielsweise auch eine Folie sein. Dabei kann die Herstellung des Formkörpers (FK*) im Rahmen der vorliegenden Erfindung auf alle üblichen Arten erfolgen, beispielsweise durch Extrusion, Spritzguss, Sinterverfahren oder aus Lösung.

Gemäß einer weiteren Ausführungsform betrifft die vorliegende Erfindung demgemäß ein Verfahren wie zuvor beschrieben, wobei der Formkörper (FK*) in Schritt (b) mittels Extrusion, Spritzguss, Sinterverfahren oder aus Lösung hergestellt wird.

Gemäß Schritt (c) des erfindungsgemäßen Verfahrens wird der Formkörper (FK*) auf eine Temperatur unterhalb der Temperatur, bei der eine permanente Verformbarkeit des Formkörpers (FK*) gegeben ist, beispielsweise also auf eine Temperatur unterhalb des Schmelzpunktes, und oberhalb der Schalttemperatur des thermoplastischen Polyurethans erwärmt.

Gemäß einer weiteren Ausführungsform betrifft die vorliegende Erfindung demgemäß ein Verfahren wie zuvor beschrieben, wobei der Beginn der permanenten Verformbarkeit dem Beginn des Schmelzens der Hartphase des thermoplastischen Polyurethans entspricht, und die Schalttemperatur dem Beginn des in der Temperatur am höchsten liegenden Phasenüberganges vor dem Schmelzbereich entspricht.

Geeignete thermoplastische Polyurethane weisen beispielsweise eine Schmelztemperatur im Bereich von 140 bis 250 °C auf, bevorzugt im Bereich von 160 bis 230 °C.

Geeignete thermoplastische Polyurethane weisen beispielsweise eine Schalttemperatur im Bereich von 0 bis 130 °C auf, bevorzugt im Bereich von 20 bis 100 °C, besonders bevorzugt im Bereich von 30 bis 80 °C.

Gemäß einer weiteren Ausführungsform betrifft die vorliegende Erfindung demgemäß ein Verfahren wie zuvor beschrieben, wobei die Schalttemperatur des thermoplastischen Polyurethans (T_{schalt}) im Bereich von 0 bis 130 °C liegt.

Das Erwärmen kann erfindungsgemäß auf jede dem Fachmann bekannte geeignete Art erfolgen. Vorzugsweise erfolgt das Erwärmen durch elektrisches Beheizen, Beheizen über erhitztes Öl oder Wasser, Induktionsfelder, Warmluft, IR-Strahlung oder energiereiche Strahlung (Laser).

Der gemäß Schritt (c) des erfindungsgemäßen Verfahrens erwärmte Formkörper (FK*) wird dann gemäß Schritt (d) des Verfahrens gedehnt. Erfindungsgemäß kann der Formkörper in einer, zwei oder drei Dimensionen gedehnt werden. Dabei kann der Formkörper gestreckt werden, insbesondere, wenn der Formkörper eine Folie ist, oder auch aufgeblasen werden. Nach der Dehnung ist die Ausdehnung des Formkörpers in mindestens einer Dimension größer als vor der Dehnung. Dabei beträgt die Ausdehnung des gemäß Schritt (d) erhaltenen Formkörpers (FK) vorzugsweise in mindestens einer Dimension mindestens 150 % der Ausdehnung des Formkörpers (FK*), weiter bevorzugt mindestens 175 % der Ausdehnung des Formkörpers (FK*). Die Dehnung in einer Dimension kann auch durch eine Kompression in einer anderen Dimension hervorgerufen werden.

Gemäß einer weiteren Ausführungsform betrifft die vorliegende Erfindung demgemäß ein Verfahren wie zuvor beschrieben, wobei die Ausdehnung des gemäß Schritt (d) erhaltenen Formkörpers (FK) in mindestens einer Dimension mindestens 150 % der Ausdehnung des Formkörpers (FK*) beträgt.

Erfindungsgemäß weist der Formkörper (FK*) eine ausreichende Wanddicke auf, um die Dehnung gemäß Schritt (d) zu gewährleisten. Bei der Dehnung des Formkörpers kann die Wanddicke geringer werden.

Gemäß Schritt (e) wird der gedehnte Formkörper (FK) dann auf eine Temperatur unterhalb der Schalttemperatur des thermoplastischen Polyurethans abgekühlt. Dabei bleibt erfindungsgemäß die Ausdehnung des Formkörpers (FK) im Wesentlichen konstant. Erfindungsgemäß tritt nach Abkühlen und Spannungsentlastung gemäß Schritt (e) eine unmittelbare Schrumpfung von weniger als 15 % oder keine Schrumpfung auf.

Es wurde gefunden, dass ein nach einem erfindungsgemäßen Verfahren erhaltener Formkörper (FK) einen Formgedächtnis-Effekt aufweist. Erfindungsgemäß wird dies durch die spezielle Verfahrensführung in Kombination mit dem erfindungsgemäß eingesetzten thermoplastischen Polyurethan erreicht.

So kann erfindungsgemäß die Ausdehnung des erhaltenen Formkörpers (FK) beim Abkühlen auf Temperaturen unterhalb der Schalttemperatur im Wesentlichen konstant bleiben und bei einer nachfolgenden Erwärmung oberhalb des Glasüberganges um mindestens 20 % relaxieren, d.h. der Formkörper schrumpft. Die Ausdehnung relaxiert bei der Erwärmung auf eine Temperatur oberhalb der Schalttemperatur maximal auf die ursprüngliche Ausdehnung.

Es ist im Rahmen der vorliegenden Erfindung wesentlich, dass bei der Herstellung des thermoplastischen Polyurethans gemäß Schritt (a) mindestens ein Kettenverlängerer und die Polyolzusammensetzung wie zuvor beschrieben eingesetzt werden.

Erfindungsgemäß kann ein Kettenverlängerer eingesetzt werden, es können jedoch auch Mischungen verschiedener Kettenverlängerer eingesetzt werden.

Als Kettenverlängerer können im Rahmen der vorliegenden Erfindung beispielsweise Verbindungen mit Hydroxyl- oder Amino-Gruppen eingesetzt werden, insbesondere mit 2 Hydroxyl- oder Amino-Gruppen. Erfindungsgemäß ist es jedoch auch möglich, dass Gemische verschiedener Verbindungen als Kettenverlängerer eingesetzt werden. Dabei ist erfindungsgemäß die mittlere Funktionalität der Mischung 2.

Erfindungsgemäß bevorzugt werden als Kettenverlängerer Verbindungen mit Hydroxylgruppen eingesetzt, insbesondere Diole. Dabei können bevorzugt aliphatische, araliphatische, aromatische und/oder cycloaliphatische Diole mit einem Molekulargewicht von 50 g/mol bis 220 g/mol eingesetzt werden. Bevorzugt sind Alkandiole mit 2 bis 10 C-Atomen im Alkylenrest, insbesondere Di-, Tri-, Tetra-, Penta-, Hexa-, Hepta-, Okta-, Nona- und/oder Dekaalkylenglykole. Für die vorliegende Erfindung sind besonders bevorzugt 1,2-Ethylenglykol, 1,3-Propandiol, 1,4-Butandiol, 1,6-Hexandiol. Auch aromatische Verbindungen wie Hydroxychinon(bis(2-hydroxyethyl))ether können eingesetzt werden.

Erfindungsgemäß können auch Verbindungen mit Amino-Gruppen eingesetzt werden, beispielsweise Diamine. Ebenso können Gemische von Diolen und Diaminen eingesetzt werden.

Bevorzugt ist der Kettenverlängerer ein Diol mit einem Molekulargewicht Mw < 220 g/mol. Erfindungsgemäß ist es möglich, dass lediglich ein Diol mit einem Molekulargewicht Mw < 220 g/mol zur Herstellung des transparenten, thermoplastischen Polyurethans eingesetzt wird.

Gemäß einer weiteren Ausführungsform werden mehr als ein Diol als Kettenverlängerer eingesetzt. Es können somit auch Mischungen von Kettenverlängerern eingesetzt werden, wobei mindestens ein Diol ein Molekulargewicht Mw < 220 g/mol aufweist. Werden mehr als ein Kettenverlängerer eingesetzt, so kann das zweite oder weitere Kettenverlängerer auch ein Molekulargewicht ≥ 220 g/mol aufweisen.

Gemäß einer weiteren Ausführungsform ist der Kettenverlängerer ausgewählt aus der Gruppe bestehend aus 1,4-Butandiol und 1,6-Hexandiol.

Gemäß einer weiteren Ausführungsform betrifft die vorliegende Erfindung demgemäß ein Verfahren wie zuvor beschrieben, wobei der gemäß (i) in Schritt (a) des erfindungsgemäßen Verfahrens eingesetzte Kettenverlängerer ein Diol mit einem Molekulargewicht Mw < 220 g/mol ist.

Der Kettenverlängerer, insbesondere das Diol mit einem Molekulargewicht Mw < 220 g/mol, wird vorzugsweise in einem molaren Verhältnis im Bereich von 40:1 bis 1:10 zu dem Polyol (P1) eingesetzt. Bevorzugt werden der Kettenverlängerer und das Polyol (P1) in einem molaren Verhältnis im Bereich von 20:1 bis 1:9 eingesetzt, weiter bevorzugt im Bereich von 10:1 bis 1:8, beispielsweise im Bereich von 5:1 bis 1:5, oder auch im Bereich von 4:1 bis 1:4, weiter bevorzugt im Bereich von 3:1 bis 1:2.

Gemäß einer weiteren Ausführungsform betrifft die vorliegende Erfindung demgemäß ein Verfahren wie zuvor beschrieben, wobei der gemäß (i) eingesetzte Kettenverlängerer und das in der Polyolzusammensetzung enthaltene Polyol (P1) in einem molaren Verhältnis von 40 zu 1 bis 1 zu 10 eingesetzt werden.

Erfindungsgemäß umfasst die Polyolzusammensetzung mindestens ein Polyol (P1), das mindestens einen aromatischen Polyester-Block (B1) aufweist. Bevorzugt ist das Polyol (P1) ein Polyol, das mindestens einen Polyethylenterephthalat-Block aufweist.

Im Rahmen der vorliegenden Erfindung sind insbesondere solche Polyole (P1) geeignet, die auf aromatischen Polyestern basieren, wie Polybutylenterephthalat (PBT) oder Polyethylenterephthalat (PET). Vorzugsweise wird dabei zur Herstellung des Polyols (P1) der aromatische Polyester mit Dicarbonsäuren und Diolen zu gemischten aromatisch / aliphatischen Polyesterdiolen umgesetzt. Beispielsweise ist es im Rahmen der vorliegenden Erfindung möglich, den aromatischen Polyester in fester oder flüssiger Form mit Dicarbonsäuren und Diolen umzusetzen. Erfindungsgemäß weist dabei üblicherweise der eingesetzte aromatische Polyester ein höheres Molekulargewicht auf als die im Polyol (P1) enthaltenen Blöcke (B1).

Erfindungsgemäß geeignete Polyesterpolyole (P1) enthalten typischerweise 1 bis 70 Gew.-%, vorzugsweise 3 bis 60 Gew.-%, besonders bevorzugt 5 bis 50 Gew.-%, ganz besonders bevorzugt 10 bis 40 Gew.-% der aromatischen Polyester-Blöcke (B1).

Typischerweise weist das Polyol (P1) ein Molekulargewicht Mn im Bereich von 500 bis 2500, bevorzugt im Bereich von 500 bis 2000, besonders bevorzugt im Bereich von 750 bis 1500, ganz besonders bevorzugt im Bereich von 1000 bis 1500 g/Mol auf.

Bei der Herstellung der Polyole (P1) werden vorzugsweise Diole mit 2 bis 10 Kohlenstoffatomen, beispielsweise Ethandiol, Propandiol, Butandiol, Pentandiol, Hexandiol oder Di- oder Triethylenglykol, insbesondere 1,4-Butandiol oder Mischungen daraus eingesetzt. Auch kurze Polyetherdiole, wie beispielsweise PTHF250 oder PTHF 650 oder ein kurzkettiges Polypropylenglykol wie ein PPG 500 können eingesetzt werden. Als Dicarbonsäuren können beispielsweise lineare oder verzweigtkettige Disäuren mit vier bis 12 Kohlenstoffatomen oder Mischungen daraus eingesetzt werden. Vorzugsweise wird Adipinsäure, Bernsteinsäure, Glutarsäure oder Sebazinsäure oder eine Mischung der genannten Säuren eingesetzt. Besonders bevorzugt ist im Rahmen der vorliegenden Erfindung Adipinsäure. Erfindungsgemäß können bei der Herstellung der Polyole (P1) auch weitere Polyesterdiole als Einsatzstoffe eingesetzt werden, beispielsweise Butandioladipat oder Ethylenadipat.

Erfindungsgemäß kann die Polyolzusammensetzung neben dem mindestens einen Polyol (P1) weitere Polyole enthalten. Dementsprechend können im Rahmen der vorliegenden Erfindung auch mindestens ein Kettenverlängerer und eine Polyolzusammensetzung umfassend mindestens ein Polyol (P1) wie zuvor beschrieben und mindestens ein weiteres Polyol eingesetzt werden.

Vorzugsweise weisen die weiteren Polyole keinen Polyethylenterephthalat-Block auf. Gemäß einer weiteren Ausführungsform betrifft die vorliegende Erfindung demgemäß ein Verfahren wie zuvor beschrieben, wobei die Polyolzusammensetzung ein Polyol ausgewählt aus der Gruppe bestehend aus Polyetherolen, Polyesterolen, Polycarbonatalkoholen und Hybridpolyolen umfasst.

Als höhermolekulare Verbindungen mit gegenüber Isocyanaten reaktiven Wasserstoffatomen können die allgemein bekannten Polyole mit gegenüber Isocyanaten reaktiven Verbindungen eingesetzt werden.

Polyole sind dem Fachmann grundsätzlich bekannt und beispielsweise beschrieben im "Kunststoffhandbuch, Band 7, Polyurethane", Carl Hanser Verlag, 3. Auflage 1993, Kapitel 3.1. Besonders bevorzugt werden Polyesterole oder Polyetherole als Polyole eingesetzt. Besonders bevorzugt sind Polyesterpolyole. Ebenso können Polycarbonate eingesetzt werden. Auch Copolymere können im Rahmen der vorliegenden Erfindung eingesetzt werden. Das zahlenmittlere Molekulargewicht der erfindungsgemäß eingesetzten Polyole liegen vorzugsweise zwischen 0,5x10³g/mol und 8 x10³ g/mol, bevorzugt zwischen 0,6 x10³ g/mol und 5 x10³ g/mol, insbesondere zwischen 0,8 x10³ g/mol und 3 x10³ g/mol.

Bevorzugt besitzen sie eine mittlere Funktionalität gegenüber Isocyanaten von 1,8 bis 2,3, besonders bevorzugt 1,9 bis 2,2, insbesondere 2.

Als Polyesterole können Polyesterole auf Basis von Disäuren und Diolen eingesetzt werden. Als Diole werden vorzugsweise Diole mit 2 bis 10 Kohlenstoffatomen, beispielsweise Ethandiol, Propandiol, Butandiol, Pentandiol, Hexandiol oder Di- oder Triethylenglykol, insbesondere 1,4-Butandiol oder Mischungen daraus eingesetzt. Als Disäuren können alle bekannten Disäuren eingesetzt werden, beispielsweise lineare oder verzweigtkettige Disäuren mit vier bis 12 Kohlenstoffatomen oder Mischungen daraus. Vorzugsweise wird Adipinsäure als Disäure eingesetzt.

Bevorzugte Polyetherole sind erfindungsgemäß Polyethyleneglykole, Polypropylenglykole und Polytetrahydrofurane.

Gemäß einer besonders bevorzugten Ausführungsform ist das Polyol ein Polytetrahydrofuran (PTHF) mit einem Molekulargewicht im Mn Bereich von 600 g/mol bis 2500 g/mol.

Erfindungsgemäß sind neben PTHF diverse weitere Polyether geeignet, aber auch Polyester, Blockcopolymere sowie Hybrid Polyole wie z.B. Poly(ester/amid) verwendbar.

Bevorzugt haben die eingesetzten Polyole eine mittlerer Funktionalität zwischen 1,8 und 2,3, bevorzugt zwischen 1,9 und 2,2, insbesondere 2. Bevorzugt weisen die erfindungsgemäß eingesetzten Polyole nur primäre Hydroxylgruppen auf.

Erfindungsgemäß kann das Polyol in reiner Form oder in Form einer Zusammensetzung enthaltend das Polyol und mindestens ein Lösungsmittel eingesetzt werden. Geeignete Lösungsmittel sind dem Fachmann an sich bekannt.

Das zusätzliche Polyol wird vorzugsweise in einem molaren Verhältnis im Bereich von 10:1 bis 1:10 zu dem Polyol (P1) eingesetzt wird. In weiter bevorzugten Ausführungsformen werden das weitere Polyol und das Polyol (P1) in einem molaren Verhältnis im Bereich von 9:1 bis 1:9 eingesetzt, weiter bevorzugt im Bereich von 5:1 bis 1:5.

Erfindungsgemäß wird mindestens ein Polyisocyanat eingesetzt. Erfindungsgemäß können auch Mischungen aus zwei oder mehr Polyisocyanaten eingesetzt werden.

Bevorzugte Polyisocyanate sind im Rahmen der vorliegenden Erfindung Diisocyanate, insbesondere aliphatische oder aromatische Diisocyanate, weiter bevorzugt aromatische Diisocyanate.

Gemäß einer weiteren Ausführungsform betrifft die vorliegende Erfindung demgemäß ein Verfahren wie zuvor beschrieben, wobei das Polyisocyanat ein aromatisches Diisocyanat ist.

Des Weiteren können im Rahmen der vorliegenden Erfindung vorreagierte Prepolymere als Isocyanatkomponenten eingesetzt werden, bei denen ein Teil der OH-Komponenten in einem vorgelagerten Reaktionsschritt mit einem Isocyanat zur Reaktion gebracht werden. Diese Prepolymere werden in einem nachfolgenden Schritt, der eigentlichen Polymerreaktion, mit den restlichen OH-Komponenten zur Reaktion gebracht und bilden dann das thermoplastische Polyurethan. Die Verwendung von Prepolymeren bietet die Möglichkeit, auch OH-Komponenten mit sekundären Alkoholgruppen zu verwenden.

Als aliphatische Diisocyanate werden übliche aliphatische und/oder cycloaliphatische Diisocyanate eingesetzt, beispielsweise Tri-, Tetra-, Penta-, Hexa-, Hepta- und/oder Oktamethylendiisocyanat, 2-Methylpentamethylen-1,5-diisocyanat, 2-Ethyltetramethylen-1,4-diisocyanat, Hexamethylen-1,6-diisocyanat (HDI), Pentamethylen-1,5-diisocyanat, Butylen-1,4-diisocyanat, Trimethylhexamethylen-1,6-diisocyanat, 1-Isocyanato-3,3,5-trimethyl-5-isocyanatomethyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder 1-Methyl-2,6-cyclohexandiisocyanat, 4,4'-, 2,4'- und/oder 2,2'-Methylendicyclohexyldiisocyanat (H12MDI).

Bevorzugte aliphatische Polyisocyanate sind Hexamethylen-1,6-diisocyanat (HDI), 1-Isocyanato-3,3,5-trimethyl-5-isocyanatomethyl-cyclohexan und 4,4'-, 2,4'- und/oder 2,2'-Methylendicyclohexyldiisocyanat (H12MDI); insbesondere bevorzugt sind 4,4'-, 2,4'- und/oder 2,2'-Methylendicyclohexyldiisocyanat (H12MDI) und 1-Isocyanato-3,3,5-trimethyl-5-isocyanatomethyl-cyclohexan oder Mischungen davon.

Demgemäß betrifft die vorliegende Erfindung gemäß einer weiteren Ausführungsform ein wie zuvor beschriebenes Verfahren, wobei das Polyisocyanat ausgewählt ist aus der Gruppe bestehend aus 4,4'-, 2,4'- und/oder 2,2'-Methylendicyclohexyldiisocyanat (H12MDI), Hexamethylendiisocyanat (HDI) und 1-Isocyanato-3,3,5-trimethyl-5-isocyanatomethyl-cyclohexan (IPDI) oder Mischungen davon.

Geeignete aromatische Diisocyanate sind insbesondere 2,2'-, 2,4'- und/oder 4,4'-Diphenylmethandiisocyanat (MDI), 1,5-Naphthylendiisocyanat (NDI), 2,4- und/oder 2,6-Toluylendiisocyanat (TDI), 3,3'-Dimethyl-4,4'-Diisocyanato-Diphenyl (TODI), p-Phenylendiisocyanat (PDI), Diphenylethan-4,4'-diisoyanat (EDI), Diphenylmethandiisocyanat, 3,3'-Dimethyl-diphenyl-diisocyanat, 1,2-Diphenylethan-diisocyanat und/oder Phenylendiisocyanat.

Bevorzugte aromatische Diisocyanate sind 2,2'-, 2,4'- und/oder 4,4'-Diphenylmethandiisocyanat (MDI) und deren Mischungen.

Bevorzugte Beispiele für höherfunktionelle Isocyanate sind Triisocyanate, z. B. Triphenylmethan-4,4',4"-triisocyant, weiterhin die Cyanurate der vorgenannten Diisocyanate, sowie die durch partielle Umsetzung von Diisocyanaten mit Wasser erhältlichen Oligomere, z. B. die Biurete der vorgenannten Diisocyanate, ferner Oligomere, die durch gezielte Umsetzung von semiblockierten Diisocyanaten mit Polyolen, die im Mittel mehr als 2 und vorzugsweise 3 oder mehr Hydroxy-Gruppen aufweisen, erhältlich sind.

Gemäß einer weiteren Ausführungsform betrifft die vorliegende Erfindung ein wie zuvor beschriebenes Verfahren, wobei das Polyisocyanat ein aliphatisches Diisocyanat ist.

Erfindungsgemäß kann das Polyisocyanat in reiner Form oder in Form einer Zusammensetzung enthaltend das Polyisocyanat und mindestens ein Lösungsmittel eingesetzt werden. Geeignete Lösungsmittel sind dem Fachmann bekannt. Geeignet sind beispielsweise nicht reaktive Lösungsmittel wie Ethylacetat, Methylethylketon, Tetrahydrofuran und Kohlenwasserstoffe.

Erfindungsgemäß können bei der Umsetzung von dem mindestens einen aliphatischen Polyisocyanat, dem mindestens einen Kettenverlängerer, und der mindestens einen Polyolzusammensetzung weitere Einsatzstoffe zugesetzt werden, beispielsweise Katalysatoren oder Hilfs- und Zusatzstoffe.

Geeignete Hilfs- und Zusatzstoffe sind dem Fachmann an sich bekannt. Genannt seien beispielsweise oberflächenaktive Substanzen, Flammschutzmittel, Keimbildungsmittel, Oxidationsstabilisatoren, Antioxidantien, Gleit- und Entformungshilfen, Farbstoffe und Pigmente, Stabilisatoren, z. B. gegen Hydrolyse, Licht, Hitze oder Verfärbung, anorganische und/oder organische Füllstoffe, Verstärkungsmittel und Weichmacher. Geeignete Hilfs- und Zusatzstoffe können beispielsweise dem Kunststoffhandbuch, Band VII, herausgegeben von Vieweg und Höchtlen, Carl Hanser Verlag, München 1966 (S103-113) entnommen werden.

Geeignete Katalysatoren sind ebenfalls grundsätzlich aus dem Stand der Technik bekannt. Geeignete Katalysatoren sind beispielsweise organische Metallverbindungen ausgewählt aus der Gruppe bestehend aus Zinn-, Titan-, Zirkonium-, Hafnium-, Bismut-, Zink-, Aluminium- und Eisenorganylen, wie beispielsweise Zinnorganylverbindungen, bevorzugt Zinndialkyle wie Zinn-II-isooctoat, Zinndioctoat, Dimethylzinn oder Diethylzinn, oder Zinnorganylverbindungen aliphatischer Carbonsäuren, bevorzugt Zinndiacetat, Zinndilaurat, Dibutylzinndiacetat, Dibutylzinndilaurat, Titansäureester, Bismutverbindungen, wie Bismutalkylverbindungen, bevorzugt Bismutneodecanoat oder ähnliche, oder Eisenverbindungen, bevorzugt Eisen-(III)-acetylacetonat.

Gemäß einer bevorzugten Ausführungsform werden die Katalysatoren ausgewählt aus Zinnverbindungen und Bismutverbindungen, weiter bevorzugt Zinnalkylverbindungen oder Bismutalkylverbindungen. Besonders geeignet sind die Zinn-II-isooctoat und Bismutneodecanoat.

Die Katalysatoren werden üblicherweise in Mengen von 3 ppm bis 2000 ppm, bevorzugt 10 ppm bis 1000 ppm, weiter bevorzugt 20 ppm bis 500 ppm und am meisten bevorzugt von 30 ppm bis 300 ppm eingesetzt.

Das Verfahren gemäß Schritt (a) kann prinzipiell unter an sich bekannten Reaktionsbedingungen durchgeführt werden.

Gemäß einer bevorzugten Ausführungsform wird das Verfahren gemäß Schritt (a) unter erhöhten Temperaturen als Raumtemperatur durchgeführt, weiter bevorzugt im Bereich zwischen 50 °C und 200 °C, besonders bevorzugt im Bereich von 65 °C und 150 °C, insbesondere im Bereich von 75 °C und 120 °C.

Das Erwärmen kann erfindungsgemäß auf jede dem Fachmann bekannte geeignete Art erfolgen. Vorzugsweise durch elektrisches Beheizen, Beheizen über erhitztes Öl oder Wasser, Induktionsfelder, Warmluft oder IR-Strahlung.

Die erhaltenen thermoplastischen Polyurethane werden erfindungsgemäß zu einem Formkörper (FK*) verarbeitet. Das Verfahren umfasst demgemäß Schritt (a) und die Schritte (b) bis (e). Erfindungsgemäß kann das Verfahren weitere Schritte, beispielsweise Temperaturbehandlungen, umfassen. Bevorzugt weist das erfindungsgemäße Verfahren jedoch genau die Schritte (a) bis (e) ohne weitere Zwischenschritte auf.

Gemäß einer weiteren Ausführungsform betrifft die vorliegende Erfindung ein Verfahren wie zuvor beschrieben, wobei der Formkörper (FK) durch Erwärmen auf eine Temperatur oberhalb der Schalttemperatur eine Rückstellung erfährt. Vorzugsweise erfolgt eine Rückstellung um mindestens 20 %. Demgemäß betrifft die vorliegende Erfindung gemäß einer weiteren Ausführungsform auch ein Verfahren wie zuvor beschrieben, wobei der Formkörper (FK) durch Erwärmen auf eine Temperatur oberhalb der Schalttemperatur eine Rückstellung um mindestens 20 % erfährt.

Mit dem erfindungsgemäßen Verfahren wird ein Formkörper (FK) erhalten, der einen Formgedächtnis-Effekt aufweist. Gemäß einem weiteren Aspekt betrifft die vorliegende Erfindung auch Formkörper, erhältlich oder erhalten gemäß einem Verfahren wie zuvor beschrieben.

Prinzipiell kann es sich bei dem Formkörper (FK) um Körper aller möglichen Formen handeln, beispielsweise Extrusionsprodukte wie Folien und andere Formkörper, wobei es sich vorzugsweise um eine Folie oder einen Schlauch handelt.

Gemäß einer weiteren Ausführungsform betrifft die vorliegende Erfindung demgemäß einen Formkörper wie zuvor beschrieben, wobei der Formkörper ein Schlauch oder eine Folie ist.

Weiter betrifft die vorliegende Erfindung ein thermoplastisches Polyurethan, erhältlich oder erhalten durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Polyol (P1) umfasst, das mindestens einen aromatischen Polyester-Block (B1) aufweist,
wobei das Polyol (P1) ein Molekulargewicht Mn im Bereich von 500 bis 2500 g/Mol aufweist und auf Polybutylenterephthalat (PBT) oder Polyethylenterephthalat (PET) basiert,
wobei das Polyol (P1) 1 bis 70 Gew.-% der aromatischen Polyester-Blöcke (B1) enthält,
wobei der Kettenverlängerer ein Diol mit einem Molekulargewicht Mw < 220 g/mol ist, und
wobei das Polyisocyanat ein aromatisches Diisocyanat ist.

Insbesondere betrifft die vorliegende Erfindung ein derartiges thermoplastisches Polyurethan, wobei die Polyolzusammensetzung mindestens ein Polyol (P1) umfasst, das mindestens einen Polyethylenterephthalat-Block aufweist.

Bezüglich der bevorzugten Ausführungsformen wird auf die obigen Ausführungen Bezug genommen.

Offenbart ist auch die Verwendung eines thermoplastischen Polyurethans zur Herstellung eines Formkörpers mit Formgedächtnis-Effekt in einem Temperaturbereich von 0 °C bis 130 °C, wobei das thermoplastische Polyurethan erhältlich oder erhalten ist durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Polyol (P1) umfasst, das mindestens einen aromatischen Polyester-Block (B1) aufweist.

Insbesondere betrifft die vorliegende Erfindung auch die Verwendung eines thermoplastischen Polyurethans zur Herstellung eines Formkörpers mit Formgedächtnis-Effekt in einem Temperaturbereich von 0 °C bis 130 °C, wobei das thermoplastische Polyurethan erhältlich oder erhalten ist durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Polyol (P1) umfasst, das mindestens einen Polyethylenterephthalat-Block aufweist

Gemäß einer weiteren Ausführungsform betrifft die vorliegende Erfindung demgemäß die Verwendung eines thermoplastischen Polyurethans zur Herstellung eines Formkörpers mit Formgedächtnis-Effekt wie zuvor beschrieben, wobei der Formkörper ein Schrumpfschlauch oder eine Schrumpffolie ist.

Die nachfolgenden Beispiele dienen der Veranschaulichung der Erfindung.

### BEISPIELE

### 1 Folgende Einsatzstoffe wurden eingesetzt:

- Polyol 1:: Polyesterpolyol auf Basis Adipinsäure, 1,4-Butandiol und Monoethylenglykol mit MW 2000 g/mol und einer OH-Zahl von 56, Funktionalität: 2
- Polyol 2:: Polyetherpolyol basierend auf Tetramethylenoxid mit einer OHZahl von 113,9 und ausschließlich Primären OH-Gruppen, Funktionalität: 2
- Polyol 3:: Polyesterpolyol auf Basis Adipinsäure, Bernsteinsäure, Glutarsäure, PET und Diethylenglykol und einer OH-Zahl von 75,6 und Funktionalität: 2
- Polyol 4:: Polyesterpolyol auf Basis Adipinsäure, Bernsteinsäure, Glutarsäure, PET und Diethylenglykol und einer OH-Zahl von 110,6 und Funktionalität: 2
- Polyol 5:: Polyesterpolyol auf Basis Adipinsäure, PET und Diethylenglykol, und einer OH-Zahl von 113,8 und Funktionalität: 2
- Isocyanat 1:: aromatisches Isocyanat (4,4' Methylendiphenyldiisocyanat)
- KV:: 1,4- Butandiol
- Katalysator 1:: Zinn-II-isooctoat (50 %ig in Dioktyladipat)
- Stabilisator 1:: Hydrolysestabilisator auf der Basis von Carbodiimiden
- Stabilisator 2:: sterisch gehindertes Phenol

### 2 Synthese der Polyester Polyole mit PET Blöcken

### 2.1 Synthese von Polyol 3

Einem 3000 ml Rundhalskolben versehen mit Thermometer, Stickstoffeinleitung, Rührer und Heizpilz werden zunächst 1040,9 g Dicarbonsäuregemisch (bestehend aus Adipinsäure, Glutarsäure und Bernsteinsäure) und 1016,2 g Diethylenglykol zugefügt. Das Gemisch wird anschließend auf 120 °C erhitzt bis eine homogene Mischung entsteht. Zum Gemisch werden nun 750 g Polyethylenterephthalat (PET) hinzugegeben. Die Reaktionsmischung wird weiter auf 240 °C erhitzt und das entstehende Reaktionswasser kontinuierlich entfernt. Währen der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.
Das erhaltene Polymer weist folgende Eigenschaften auf
Hydroxylzahl: 75,6 mg KOH/g
Säurezahl: 0,7 mg KOH/g
Viskosität bei 75 °C: 840 mPas

### 2.2 Synthese von Polyol 4

Einem 3000 ml Rundhalskolben versehen mit Thermometer, Stickstoffeinleitung, Rührer und Heizpilz werden zunächst 819,5 g Dicarbonsäuregemisch (bestehend aus Adipinsäure, Glutarsäure und Bernsteinsäure) und 925,9 g Diethylenglykol zugefügt. Das Gemisch wird anschließend auf 120 °C erhitzt bis eine homogene Mischung entsteht. Zum Gemisch werden nun 1000 g Polyethylenterephthalat (PET) hinzugegeben. Die Reaktionsmischung wird weiter auf 240 °C erhitzt und das entstehende Reaktionswasser kontinuierlich entfernt. Währen der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.
Das erhaltene Polymer weist folgende Eigenschaften auf
Hydroxylzahl: 110,6 mg KOH/g
Säurezahl: 0,6 mg KOH/g
Viskosität bei 75 °C: 660 mPas

### 2.3 Synthese von Polyol 5

Einem 3000 ml Rundhalskolben versehen mit Thermometer, Stickstoffeinleitung, Rührer und Heizpilz werden zunächst 1008,4 g Adipinsäure und 1020,0 g Diethylenglykol zugefügt. Das Gemisch wird anschließen auf 120 °C erhitzt bis eine homogen Mischung entsteht. Zum Gemisch werden nun 750 g PET hinzugegeben. Die Reaktionsmischung wird weiter auf 240 °C erhitzt und das entstehende Reaktionswasser kontinuierlich entfernt. Währen der gesamten Synthese werden die PET Flocken langsam abgebaut und es entsteht ein transparentes Gemisch, welches so lange kondensiert wird, bis ein Produkt mit einer Säurezahl <1.0 mg KOH/g erhalten wird.
Das erhaltene Polymer weist folgende Eigenschaften auf
Hydroxylzahl: 113,8 mg KOH/g
Säurezahl: 0,4 mg KOH/g
Viskosität bei 75 °C: 381 mPas

### 3 Methoden

### 3.1 Viskositätsbestimmung:

Die Viskosität der Polyole wurde, wenn nicht anders angegeben, bei 75 °C gemäß DIN EN ISO 3219 (Ausgabe 01.10.1994) mit einem Rotationsviskosimeter Rheotec RC 20 unter Verwendung der Spindel CC 25 DIN (Spindel-Durchmesser: 12,5 mm; Messzylinder-Innendurchmesser: 13,56 mm) bei einer Scherrate von 50 1/s bestimmt.

### 3.2 Messung der Hydroxylzahl:

Die Hydroxylzahlen wurden nach der Phthalsäureanhydrid-Methode DIN 53240 (. Ausgabe: 01.12.1971) bestimmt und in mg KOH/g angegeben.

### 3.3 Messung der Säurezahl:

Die Säurezahl wurde nach DIN EN 1241 (Ausgabe: 01.05.1998) bestimmt und ist in mg KOH/g angegeben.

### 4 Allgemeines Herstellbeispiel

Die Polyole wurden bei 80 °C in einem Behälter vorgelegt und mit den Komponenten gemäß Tabelle 1 unter starkem Rühren vermischt. Die Reaktionsmischung erhitzte sich auf über 110 °C und wurde dann auf einen beheizten, teflonbeschichteten Tisch ausgegossen. Die erhaltene Gießschwarte wurde 15 Stunden bei 80 °C getempert, anschließend granuliert und im Spritzguss verarbeitet.

**Tabelle 1: Eingesetzte Verbindungen**

| | Vergleich 1 | Beispiel 1 | Beispiel 2 | Beispiel 3 | Vergleich 2 | Beispiel 4 |
|---|---|---|---|---|---|---|
| Polyol 1 [g] | 800,0 | | | | | |
| Polyol 2 [g] | | | | | 800,0 | 160,0 |
| Polyol 3 [g] | | 800,0 | | | | |
| Polyol 4 [g] | | | 800,0 | | | 640,0 |
| Polyol 5 [g] | | | | 800,0 | | |
| KV [g] | 100,9 | 104,7 | 111,7 | 112,3 | 108,3 | 107,8 |
| Isocyanat 1 [g] | 384,0 | 428,7 | 510,5 | 518,0 | 504,0 | 497,9 |
| Stabilisator 1 [g] | 6,4 | 6,4 | 6,4 | 6,4 | | |
| Stabilisator 2 [g] | | | | | 14,2 | 14,2 |
| | | | | | | |
| Kennzahl | 1000 | 1000 | 1000 | 1000 | 1000 | 1000 |
| Hartsegmentgehalt | 29,7 % | 29,7 % | 29,7 % | 29,7 % | 29,0 % | 29,0 % |
| Starttemperatur | 80 °C | 80 °C | 80 °C | 80 °C | 80 °C | 80 °C |
| Abgusstemperatur | 110 °C | 110 °C | 110 °C | 110 °C | 110 °C | 110 °C |

### 5 Mechanische Eigenschaften

Die in Tabelle 2 zusammengestellten Messwerte wurden von Spritzgussplatten bzw. von Extrusionsprodukten des Beispiels 1 und 2 erstellt.

**Tabelle 2: Mechanische Eigenschaften für Beispiel 1 und 2**

| | Beispiel 1 | Beispiel 2 |
|---|---|---|
| Shore D | 52 | 77 |
| Zugfestigkeit | 46 Mpa | 42 Mpa |
| Reißdehnung | 580 % | 500 % |
| Weiterreißwiderstand | 120 kN/m | 237 kN/m |
| Abrieb | 48 mm³ | 43 mm³ |

Die folgenden Eigenschaften der erhaltenen Polyurethane wurden nach den genannten Verfahren bestimmt:
Härte: DIN ISO 7619-1
Zugfestigkeit und Reißdehnung: DIN 53504
Weiterreißwiderstand: DIN ISO 34-1, B (b)
Abriebmessung: DIN ISO 4649

### 6 Bestimmung des Schrumpfverhaltens

Von Spritzgussplatten werden ca. 1,5 cm breite und 9,3 cm lange Streifen abgeschnitten (FK*) und 30 min bei 120 °C im Heizschrank erwärmt. Anschließend werden die Streifen mit Hilfe zweier Zangen auseinander gezogen und unter fließendem kaltem Wasser abgekühlt. Danach wird der Formkörper FK wieder in den Heizschrank bei 120 °C gelegt und beobachtet wie das Rückstellverhalten ist.

Für verschieden Proben wurde das Schrumpfverhalten gemäß der allgemeinen Bestimmungsmethode bestimmt. Die Ergebnisse sind in Tabelle 3 zusammengefasst.

**Tabelle 3: Schrumpfverhalten verschiedener TPUs.**

| **Probe** | **Länge nach Ziehen (FK)** | **Streckung auf** | **Beobachtung in heißem Wasser nach Schrumpf** | **Schrumpf um** |
|---|---|---|---|---|
| Vergleich 1 | 10 cm | 107 % | schrumpft auf 9,7 cm | 3 % |
| Beispiel 1 | 16 cm | 172 % | schrumpft auf 9,6 cm | 40 % |
| Beispiel 2 | 15,5 cm | 167 % | schrumpft auf 9,5 cm | 39 % |
| Beispiel 3 | 14,2 cm | 153 % | schrumpft auf 9,5 cm | 33 % |
| Vergleich 2 | 9,8 cm | 105 % | schrumpft auf 9,6 cm | 2 % |
| Beispiel 4 | 17 cm | 183 % | schrumpft auf 9,5 cm | 44 % |

### Zitierte Literatur

JP 2005102953
WO 2011/060970 A1
US 2012/0279101 A1
WO 2015/144435 A1
US 7524914 B2
"Kunststoffhandbuch, Band 7, Polyurethane", Carl Hanser Verlag, 3. Auflage, 1993, Kapitel 3.1 und S. 103-113

## Patentansprüche

1. Verfahren zur Herstellung eines Formkörpers (FK) umfassend die folgenden Schritte:
(a) Herstellung eines thermoplastischen Polyurethans umfassend die Umsetzung
(i) mindestens einer Polyisocyanatzusammensetzung;
(ii) mindestens eines Kettenverlängerers; und
(iii) mindestens einer Polyolzusammensetzung,
wobei die Polyolzusammensetzung mindestens ein Polyol (P1) umfasst, das mindestens einen aromatischen Polyester-Block (B1) aufweist;
(b) Herstellung eines Formkörpers (FK*) aus dem thermoplastischen Polyurethan,
(c) Erwärmen des Formkörpers (FK*) auf eine Temperatur unterhalb der Temperatur, bei der eine permanente Verformbarkeit des Formkörpers (FK*) gegeben ist, und oberhalb der Schalttemperatur des thermoplastischen Polyurethans,
(d) Dehnen des erwärmten Formkörpers (FK*) unter Erhalt eines Formkörpers (FK),
(e) Abkühlen des Formkörpers (FK) auf eine Temperatur unterhalb der Schalttemperatur des thermoplastischen Polyurethans,
wobei der Beginn der permanenten Verformbarkeit dem Beginn des Schmelzens der Hartphase des thermoplastischen Polyurethans entspricht, und die Schalttemperatur dem Beginn des in der Temperatur am höchsten liegenden Phasenüberganges vor dem Schmelzbereich entspricht.

2. Verfahren gemäß Anspruch 1, wobei der aromatische Polyester-Block (B1) ein Polyester aus einer aromatischen Dicarbonsäure und einem aliphatischen Diol ist.

3. Verfahren gemäß Anspruch 1 oder 2, wobei der aromatische Polyester-Block (B1) ein Polyethylenterephthalat-Block ist.

4. Verfahren gemäß einem der Ansprüche 1 bis 3, wobei das thermoplastische Polyurethan ein kompaktes thermoplastisches Polyurethan ist.

5. Verfahren gemäß einem der Ansprüche 1 bis 4, wobei die Schalttemperatur des thermoplastischen Polyurethans (T_{schalt}) im Bereich von 0 bis 130 °C liegt.

6. Verfahren gemäß einem der Ansprüche 1 bis 5, wobei die Ausdehnung des gemäß Schritt (d) erhaltenen Formkörpers (FK) in mindestens einer Dimension mindestens 150 % der Ausdehnung des Formkörpers (FK*) beträgt.

7. Verfahren gemäß einem der Ansprüche 1 bis 6, wobei der Formkörper (FK*) in Schritt (b) mittels Extrusion, Spritzguss, Sinterverfahren oder aus Lösung hergestellt wird.

8. Verfahren gemäß einem der Ansprüche 1 bis 7, wobei der gemäß (i) eingesetzte Kettenverlängerer ein Diol mit einem Molekulargewicht Mw < 220 g/mol ist.

9. Verfahren gemäß einem der Ansprüche 1 bis 8, wobei der gemäß (i) eingesetzte Kettenverlängerer und das in der Polyolzusammensetzung enthaltene Polyol (P1) in einem molaren Verhältnis von 40 zu 1 bis 1 zu 10 eingesetzt werden.

10. Verfahren gemäß einem der Ansprüche 1 bis 9, wobei die Polyolzusammensetzung ein weiteres Polyol ausgewählt aus der Gruppe bestehend aus Polyetherolen, Polyesterolen, Polycarbonatalkoholen und Hybridpolyolen umfasst.

11. Verfahren gemäß einem der Ansprüche 1 bis 10, wobei das Polyisocyanat ein aromatisches Diisocyanat ist.

12. Verfahren gemäß einem der Ansprüchen 1 bis 11, wobei der Formkörper (FK) durch Erwärmen auf eine Temperatur oberhalb der Schalttemperatur eine Rückstellung erfährt.

13. Verfahren gemäß Anspruch 12, wobei der Formkörper (FK) durch Erwärmen auf eine Temperatur oberhalb der Schalttemperatur eine Rückstellung um mindestens 20 % erfährt.

14. Formkörper, erhältlich oder erhalten gemäß einem Verfahren gemäß einem der Ansprüche 1 bis 13.

15. Formkörper gemäß Anspruch 14, wobei der Formkörper ein Schlauch oder eine Folie ist.

16. Thermoplastisches Polyurethan, erhältlich oder erhalten durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Polyol (P1) umfasst, das mindestens einen aromatischen Polyester-Block (B1) aufweist,
wobei das Polyol (P1) ein Molekulargewicht Mn im Bereich von 500 bis 2500 g/Mol aufweist und auf Polybutylenterephthalat (PBT) oder Polyethylenterephthalat (PET) basiert,
wobei das Polyol (P1) 1 bis 70 Gew.-% der aromatischen Polyester-Blöcke (B1) enthält,
wobei der Kettenverlängerer ein Diol mit einem Molekulargewicht Mw < 220 g/mol ist, und
wobei das Polyisocyanat ein aromatisches Diisocyanat ist.

17. Thermoplastisches Polyurethan gemäß Anspruch 16, wobei das Polyol (P1) mindestens einen Polyethylenterephthalat-Block aufweist.

18. Verwendung eines thermoplastischen Polyurethans zur Herstellung eines Formkörpers mit Formgedächtnis-Effekt in einem Temperaturbereich von 0 °C bis 130 °C, wobei das thermoplastische Polyurethan erhältlich oder erhalten ist durch Umsetzung von mindestens den Komponenten (i) bis (iii):
(i) eine Polyisocyanatzusammensetzung;
(ii) mindestens ein Kettenverlängerer; und
(iii) mindestens eine Polyolzusammensetzung,
wobei die Polyolzusammensetzung mindestens ein Polyol (P1) umfasst, das mindestens einen aromatischen Polyester-Block (B1) aufweist.

19. Verwendung gemäß Anspruch 18, wobei der Formkörper ein Schrumpfschlauch oder eine Schrumpffolie ist.

## Claims

1. A method for producing a molded body (MB) comprising the following steps:
(a) producing a thermoplastic polyurethane comprising reacting
(i) at least one polyisocyanate composition,
(ii) at least one chain extender, and
(iii) at least one polyol composition,
wherein the polyol composition comprises at least one polyol (P1) which contains at least one aromatic polyester block (B1);
(b) producing a molded body (MB*) from the thermoplastic polyurethane,
(c) heating the molded body (MB*) to a temperature below the temperature at which there is permanent deformability of the molded body (MB*), and above the switching temperature of the thermoplastic polyurethanes,
(d) elongating the heated molded body (MB*) with obtention of a molded body (MB),
(e) cooling the molded body (MB) to a temperature below the switching temperature of the thermoplastic polyurethane,
wherein the start of the permanent deformability corresponds to the start of the melting of the hard phase of the thermoplastic polyurethane, and the switching temperature corresponds to the start of the phase transition lying highest in the temperature before the melting range.

2. The method according to claim 1, wherein the aromatic polyester block (B1) is a polyester of an aromatic dicarboxylic acid and an aliphatic diol.

3. The method according to claim 1 or 2, wherein the aromatic polyester block (B1) is a polyethylene terephthalate block.

4. The method according to one of claims 1 to 3, wherein the thermoplastic polyurethane is a compact thermoplastic polyurethane.

5. The method according to one of claims 1 to 4, wherein the switching temperature of the thermoplastic polyurethane (T_{switching}) lies in the range from 0 to 130°C.

6. The method according to one of claims 1 to 5, wherein the elongation of the molded body (MB) obtained according to step (d) in at least one dimension is at least 150% of the elongation of the molded body (MB*).

7. The method according to one of claims 1 to 6, wherein the molded body (MB*) in step (b) is produced by extrusion, injection molding, sinter methods or from solution.

8. The method according to one of claims 1 to 7, wherein the chain extender used according to (i) is a diol with a molecular weight Mw < 220 g/mol.

9. The method according to one of claims 1 to 8, wherein the chain extender used according to (i) and the polyol (P1) contained in the polyol composition are used in a molar ratio from 40 to 1 to 1 to 10.

10. The method according to one of claims 1 to 9, wherein the polyol composition comprises a further polyol selected from the group consisting of polyetherols, polyesterols, polycarbonate alcohols and hybrid polyols.

11. The method according to one of claims 1 to 10, wherein the polyisocyanate is an aromatic diisocyanate.

12. The method according to one of claims 1 to 11, wherein the molded body (MB) through heating to a temperature above the switching temperature undergoes a recovery.

13. The method according to claim 12, wherein the molded body (MB) through heating to a temperature above the switching temperature undergoes a recovery by at least 20%.

14. A molded body, obtainable or obtained according to a method according to one of claims 1 to 13.

15. The molded body according to claim 14, wherein the molded body is a tube or a film.

16. A thermoplastic polyurethane obtainable or obtained by reaction of at least the components (i) to (iii):
(i) a polyisocyanate composition,
(ii)at least one chain extender, and
(iii) at least one polyol composition,
wherein the polyol composition comprises at least one polyol (P1) which contains at least one aromatic polyester block (B1),
wherein the polyol (P1) has a molecular weight Mn in the range from 500 to 2500 g/mol and is based on polybutylene terephthalate (PBT) or polyethylene terephthalate (PET),
wherein the polyol (P1) contains 1 to 70 wt.% of the aromatic polyester blocks (B1).
wherein the chain extender is a diol with a molecular weight Mw < 220 g/mol, and
wherein the polyisocyanate is an aromatic diisocyanate.

17. The thermoplastic polyurethane according to claim 16, wherein the polyol (P1) contains at least one polyethylene terephthalate block.

18. The use of a thermoplastic polyurethane for producing a molded body with shape memory effect in a temperature range from 0°C to 130°C, wherein the thermoplastic polyurethane is obtainable or obtained by reaction of at least the components (i) to (iii):
(i) a polyisocyanate composition,
(ii)at least one chain extender, and
(iii) at least one polyol composition,
wherein the polyol composition comprises at least one polyol (P1) which contains at least one aromatic polyester block (B1).

19. The use according to claim 18, wherein the molded body is a shrink tube or a shrink film.

## Revendications

1. Procédé de fabrication d'un corps moulé (FK) comprenant les étapes suivantes :
(a) la fabrication d'un polyuréthane thermoplastique comprenant la mise en réaction de :
(i) au moins une composition de polyisocyanate ;
(ii) au moins un allongeur de chaînes ; et
(iii) au moins une composition de polyol,
la composition de polyol comprenant au moins un polyol (P1), qui comprend au moins une séquence polyester aromatique (B1) ;
(b) la fabrication d'un corps moulé (FK*) à partir du polyuréthane thermoplastique,
(c) le chauffage du corps moulé (FK*) à une température inférieure à la température à laquelle le corps moulé (FK*) présente une déformabilité permanente, et supérieure à la température de changement d'état du polyuréthane thermoplastique,
(d) l'étirement du corps moulé (FK*) chauffé pour obtenir un corps moulé (FK),
(e) le refroidissement du corps moulé (FK) à une température inférieure à la température de changement d'état du polyuréthane thermoplastique,
le début de la déformabilité permanente correspondant au début de la fusion de la phase dure du polyuréthane thermoplastique, et la température de changement d'état correspondant au début de la transition de phase la plus élevée en température avant la plage de fusion.

2. Procédé selon la revendication 1, dans lequel la séquence polyester aromatique (B1) est un polyester d'un acide dicarboxylique aromatique et d'un diol aliphatique.

3. Procédé selon la revendication 1 ou 2, dans lequel la séquence polyester aromatique (B1) est une séquence polyéthylène téréphtalate.

4. Procédé selon l'une quelconque des revendications 1 à 3, dans lequel le polyuréthane thermoplastique est un polyuréthane thermoplastique compact.

5. Procédé selon l'une quelconque des revendications 1 à 4, dans lequel la température de changement d'état du polyuréthane thermoplastique (T_{changement} d'état) se situe dans la plage allant de 0 à 130 °C.

6. Procédé selon l'une quelconque des revendications 1 à 5, dans lequel l'allongement du corps moulé (FK) obtenu selon l'étape (d) dans au moins une dimension est d'au moins 150 % de l'allongement du corps moulé (FK*).

7. Procédé selon l'une quelconque des revendications 1 à 6, dans lequel le corps moulé (FK*) est fabriqué à l'étape (b) par extrusion, par moulage par injection, par un procédé de frittage ou à partir d'une solution.

8. Procédé selon l'une quelconque des revendications 1 à 7, dans lequel l'allongeur de chaînes utilisé selon (i) est un diol ayant un poids moléculaire Mw < 220 g/mol.

9. Procédé selon l'une quelconque des revendications 1 à 8, dans lequel l'allongeur de chaînes utilisé selon (i) et le polyol (P1) contenu dans la composition de polyol sont utilisés en un rapport molaire de 40 sur 1 à 1 sur 10.

10. Procédé selon l'une quelconque des revendications 1 à 9, dans lequel la composition de polyol comprend un polyol supplémentaire choisi dans le groupe constitué par les polyétherols, les polyesterols, les polycarbonate-alcools et les polyols hybrides.

11. Procédé selon l'une quelconque des revendications 1 à 10, dans lequel le polyisocyanate est un diisocyanate aromatique.

12. Procédé selon l'une quelconque des revendications 1 à 11, dans lequel le corps moulé (FK) subit un rappel par chauffage à une température supérieure à la température de changement d'état.

13. Procédé selon la revendication 12, dans lequel le corps moulé (FK) subit un rappel d'au moins 20 % par chauffage à une température supérieure à la température de changement d'état.

14. Corps moulé, pouvant être obtenu ou étant obtenu par un procédé selon l'une quelconque des revendications 1 à 13.

15. Corps moulé selon la revendication 14, dans lequel le corps moulé est un tube ou un film.

16. Polyuréthane thermoplastique pouvant être obtenu ou étant obtenu par mise en réaction d'au moins les composants (i) à (iii) :
(i) une composition de polyisocyanate ;
(ii) au moins un allongeur de chaînes ; et
(iii) au moins une composition de polyol,
la composition de polyol comprenant au moins un polyol (P1), qui comprend au moins une séquence polyester aromatique (B1),
le polyol (P1) présentant un poids moléculaire Mn dans la plage allant de 500 à 2 500 g/mol et étant à base de polybutylène téréphtalate (PBT) ou de polyéthylène téréphtalate (PET),
le polyol (P1) contenant 1 à 70 % en poids des séquences polyester aromatiques (B1),
l'allongeur de chaînes étant un diol ayant un poids moléculaire Mw < 220 g/mol, et
le polyisocyanate étant un diisocyanate aromatique.

17. Polyuréthane thermoplastique selon la revendication 16, dans lequel le polyol (P1) comprend au moins une séquence polyéthylène téréphtalate.

18. Utilisation d'un polyuréthane thermoplastique pour la fabrication d'un corps moulé à effet de mémoire de forme dans une plage de température allant de 0 °C à 130 °C, le polyuréthane thermoplastique pouvant être obtenu ou étant obtenu par mise en réaction d'au moins les composants (i) à (iii) :
(i) une composition de polyisocyanate ;
(ii) au moins un allongeur de chaînes ; et
(iii) au moins une composition de polyol,
la composition de polyol comprenant au moins un polyol (P1), qui comprend au moins une séquence polyester aromatique (B1).

19. Utilisation selon la revendication 18, dans laquelle le corps moulé est un tube rétractable ou un film rétractable.
